# EUROPEAN PATENT SPECIFICATION

(11) **EP 3 792 707 B1**
(45) Date of publication and mention of the grant of the patent: **13.09.2023**
(21) Application number: 18923347.1
(22) Date of filing: 20.09.2018
(51) Int. Cl.: A47J 43/04, G05B 19/04

(54) **COOKING METHOD, COOKING DEVICE, COOKING APPLIANCE, AND COMPUTER READABLE STORAGE MEDIUM**
GARVERFAHREN, GARVORRICHTUNG, GARGERÄT UND COMPUTERLESBARES SPEICHERMEDIUM
PROCÉDÉ DE CUISSON, DISPOSITIF DE CUISSON, APPAREIL DE CUISSON, ET SUPPORT DE STOCKAGE LISIBLE PAR ORDINATEUR

(30) Priority: 19.06.2018 CN 201810631044
(43) Date of publication of application: 17.03.2021
(73) Proprietor: Foshan Shunde Midea Electrical Heating Appliances Manufacturing Co., Limited, Foshan, Guangdong 528311 (CN)
(72) Inventor: SU, Ying, Foshan, Guangdong 528311 (CN); LI, Jing, Foshan, Guangdong 528311 (CN); FANG, Zhen, Foshan, Guangdong 528311 (CN)
(74) Representative: Grünecker Patent- und Rechtsanwälte PartG mbB
(86) International application number: PCT/CN2018/106698
(87) International publication number: WO 2019/242137

(56) References cited:
- EP-A1- 1 842 433
- CN-A- 105 425 643
- CN-A- 106 724 813
- CN-A- 107 957 690
- CN-U- 205 162 708

## Description

### FIELD

The present invention relates to the field of cooking technology, specifically, to a cooking method according to the preamble of claim 1, a cooking device according to the preamble of claim 4, a cooking appliance and a computer readable storage medium.

### BACKGROUND

As a new type of cooking appliance, the wall breaker has the advantages of a juicer and a soymilk machine. On the one hand, the wall breaker can beat or grind the material to destroy its cell wall and improve the body's absorption efficiency of nutrients and dietary fiber. At the same time, it can also reduce the amount of residue. On the other hand, the material can be heated and cooked to prepare rice cereal, milkshakes, yogurt, soy milk and other foods to improve the taste and health needs of users.

In related technologies, in order to ensure that all types of materials can be cooked completely, the wall breaking treatment and heating treatment are usually performed on the materials according to the maximum time period when each cooking function is executed. However, the above cooking scheme has at least the following technical problems:
(1) It is not conducive to reducing the power consumption of cooking appliance;
(2) It causes a long waiting time and affects the user experience;
(3) It may cause the destruction of nutrients. For example, if protein and dietary fiber are overheated, they may be decomposed or deteriorated, which may reduce the absorption rate of nutrients absorbed by the body.
CN 106 724 813 A refers to a household kitchen appliance, in particular to a soy milk machine. An intelligent identification module of the machine may include an image collector and a sound collector that match the information of the material database by scanning an image of the users voice commands to identify the information such as the type, size, composition and the like of the material to be machined. The module identifies the information and transfers it to the control module. The control module controls the motor to output different rotational speed and rotation time according to different material information that the identification module may also be used to identify the degree of softness and hardness of the material in order to adjust the best speed and the best way to heat. One important aspect is the release of the material nutrition's in the slurry that relates to the motor output speed, the heating power and the soluble solids in the material composition. Soluble solids are the amount of sugars, organic acids, vitamins, minerals, proteins and amino acids that are soluble in water, contained in the material. The motor is controlled according to the release of the nutrition's and the material properties to gain an improved taste. If the machine is of a wireless type, a server may receive respective information and outputs a corresponding material recipe, which is sent to the machine in order to control the motor output to achieve intelligent pulping.
Further relevant documents are CN 105 425 643 A, CN 205 162 708 A, CN 107 957 690 A and EP 1 842 433 A1.

### SUMMARY

The present invention aims to solve at least one of the technical problems existing in the prior art or related technologies.

To this end, the first purpose of the present invention is to provide a cooking method.

Another purpose of the present invention is to provide a cooking device.

Another purpose of the present invention is to provide a cooking appliance.

Another purpose of the present invention is to provide a computer readable storage medium.

In order to achieve the above purposes, according to the technical solution of the first aspect of the present invention, a cooking method according to claim 1 is provided.

The attribute information of the material usually includes nutritional component composition, hardness, weight and variety name of the material, etc., the corresponding cooking process is determined according to the attribute information and/or culinary demand information of the material, and the corresponding wall breaking treatment and heating treatment are performed on the material. On the one hand, it can determine whether the material is resistant to cooking according to the nutritional component composition, hardness, weight and variety name of the material. For example, the cooking time and cooking power of the material resistant to cooking can be increased, which can effectively reduce the waiting time of the users, for example, shortening the cooking time and cooking power for materials that are not resistant to cooking can effectively reduce power consumption, and combine the nutritional components to determine the vitamin content, trace element content and dietary fiber content, which can reduce the decomposition and loss of nutrients. On the other hand, combined with the user's set eating needs, cooking functions and variety name of the material, it can meet the user's personalized cooking needs, wherein, the eating needs include viscosity, hardness, water content, particle size of food, low sugar, low fat, dietary fiber ratio and trace element content, etc.

Wherein, the attribute information of the received material can be from the touch panel of the cooking appliance or from the associated client.

In addition, those skilled in the art can understand that the wall breaking treatment includes whipping treatment, grinding treatment and extrusion treatment, etc., which cause the cell wall of the material to be broken.

In any of the above-mentioned technical solutions, optionally, the determining corresponding cooking process according to the attribute information specifically includes: when analyzing the attribute information to determine that category of the material to be cooked is fruit and vegetable material, determining corresponding hardness according to category information of the fruit and vegetable material; determining particle size range of cooked material according to hardness of the fruit and vegetable material, preset corresponding relationship between hardness and particle size; and determining corresponding cooking process according to the particle size range, preset corresponding relationship between particle size range and cooking process.

In this technical solution, since the fruit and vegetable material is rich in dietary fiber, and the dietary fiber ratio mainly determines the taste and hardness of the food, the preset corresponding relationship between the hardness and particle size according to the hardness of the fruit and vegetable material, to determine the particle size range of the cooked material, and the preset corresponding relationship between the particle size range and the cooking process according to the particle size range, to determine the corresponding cooking process, can provide users with food with the best granularity. Further,, the taste of the food can better satisfy the needs of users, and in order to retain vitamins and minerals to the greatest extent, the cooking power and cooking time are appropriately reduced, which is conducive to improving the user experience.

Specifically, as the whipping time increases, the particle size of the food material gradually decreases, and at the same time, the nutrition of the food material is gradually released. When it reaches a certain level (that is, the optimal particle size range), the fineness of the food material has fully satisfied the user's food requirements, and the nutrient release of the food has reached the peak, if the whipping is continued, the fineness and taste of the food will no longer be significantly improved, and the whipping time will be wasted, and even the loss of nutrients will be caused.

In any of the above-mentioned technical solutions, optionally, the determining corresponding cooking process according to the attribute information specifically further includes: when analyzing the attribute information to determine that category of the material to be cooked is a bean material, determining pre-stored nutritional component composition corresponding to the bean material; and determining corresponding cooking process according to nutrient component composition of the bean material, preset corresponding relationship between nutrient component composition and cooking process.

In this technical solution, by determining the pre-stored nutritional component composition corresponding to the bean material, and determining the corresponding cooking process according to the nutritional component composition of the bean material, the preset corresponding relationship between the nutritional component composition and the cooking process. On the one hand, since the high protein content of the bean material, a paste pot may be produced during the high temperature process, which affects the user's taste and experience. Therefore, the heating power in the corresponding cooking process needs to be appropriately reduced to reduce the occurrence of paste pot and overflow. On the other hand, the bean material may produce a large amount of the residue during the cooking process; therefore, the time of the wall breaking treatment needs to be increased in the corresponding cooking process to reduce the generation of the residue, which is conducive to improving the user's taste and the absorption rate of nutrient components.

For example, if the bean material is edamame and the cooking function is preset to "make soy milk", due to its high dietary fiber and high content of flavonoids, after obtaining the default soy milk process, the whipping process time is increased to make the soy milk reach extremely delicate, increase digestion and absorption, lower blood lipids and cholesterol.

For another example, if the bean material is black beans and the cooking function is preset to "make soy milk", due to its high protein and dietary fiber content, after obtaining the default soy milk process, on the one hand, it reduces the power and time period of the heating treatment, on the other hand, it increases the time period of the whipping process to make the soy milk extremely delicate, increase digestion and absorption, and lower blood lipids and cholesterol.

The determining corresponding cooking process according to the attribute information and/or the culinary demand information may further include: when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process.

In this technical solution, when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process. It can further meet the needs of users for healthy diet.

For example, the fruit and vegetable materials are usually rich in dietary fiber, and the dietary fiber (Dietary Fiber, DF) can be divided into two categories: water-soluble dietary fiber (Soluble Dietary Fiber, SDF) and non-water-soluble dietary fiber (Insoluble Dietary Fiber, IDF) according to different solubility. The above dietary fiber ratio refers to the component ratio of water-soluble dietary fiber and non-water-soluble dietary fiber.

The water-soluble dietary fiber (SDF) is a type of non-starch polysaccharide that is not digested by the digestive enzymes of the body, but is soluble in hot water and separated by precipitation with a certain volume of ethanol. The water-soluble dietary fiber mainly refers to the water-soluble storage substances and secretions in plant cells, and also includes some microbial polysaccharides and synthetic polysaccharides. The water-soluble dietary fiber is mainly composed of some glues. The non-water-soluble dietary fiber (IDF) refers to the non-starch structural polysaccharide that is not digested by the digestive enzymes and is insoluble in hot water, it includes cellulose, hemicellulose, lignin, chitosan and vegetable waxes.

The two types of dietary fiber (SDF and IDF) exist at the same time, and their composition has a great relationship with the particle size of the food. As the particle size decreases, the content of non-water-soluble dietary fiber (IDF) gradually decreases, while the content of water-soluble dietary fiber (SDF) gradually increases. This is because during the whipping and crushing process, on the one hand, the soluble components trapped in the fiber network structure are released; on the other hand, the insoluble components gradually become soluble components.

The main function of IDF is to produce mechanical peristaltic effect, promote gastric emptying, promote intestinal peristalsis, and moisturize the bowel. While the SDF exerts more metabolic functions and affects the metabolism of carbohydrates and lipids. It can lower blood lipids, lower cholesterol, lower blood sugar and other effects. There is a proportional relationship between these two components, namely SDF/IDF. Normally, the SDF/IDF is about 1:3 when a reasonable dietary fiber is taken in.

In order to achieve different health effects, the particle size of the food can be controlled by adjusting the parameters of the stirring treatment, and then the SDF/IDF can be adjusted. If the SDF/IDF is slightly higher, it means that the content of SDF is increased, and the food demand is biased towards lowering blood lipids, lowering cholesterol, and lowering blood sugar. If the SDF/IDF is slightly lower, it means that the content of IDF is increasing, and the food demand is biased towards the laxative effect.

In any of the above-mentioned technical solutions the determining corresponding cooking process according to the attribute information specifically further includes: when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process.

In this technical solution, when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process. It can improve the taste of the food and conducive to reducing the power consumption of the cooking appliance.

Specifically, by analyzing the attribute information to determine the increase in moisture content of the material to be cooked, it can be determined that the material is a boil-resistant material or an easy-to-cook material. For example, if a certain type of cereals absorbs water at room temperature for 30 minutes, the increase in moisture content is ΔT<10%, and the time required to reach the saturation of water absorption is t>3h, the cereals are determined to be resistant to cooking.

If a certain type of cereals absorbs water at room temperature for 30 minutes, the increase in moisture content is ΔT>10%, and the time required to reach the saturation of water absorption is t<3h, the cereals are determined to be an easy-to-cook material.

According to the technical solution of the second aspect of the present invention, a cooking device according to claim 4 is provided.

In this technical solution, since the attribute information of the material usually includes nutritional component composition, hardness, weight and variety name of the material, etc., the corresponding cooking process is determined according to the attribute information, and the corresponding wall breaking treatment and heating treatment are performed on the material. On the one hand, it can determine whether the material is resistant to cooking according to the nutritional component composition, hardness, weight and variety name of the material. For example, the cooking time and cooking power of the material resistant to cooking can be increased, which can effectively reduce the waiting time of the users, for example, shortening the cooking time and cooking power for materials that are not resistant to cooking can effectively reduce power consumption, and combine the nutritional components to determine the vitamin content, trace element content and dietary fiber content, which can reduce the decomposition and loss of nutrients. On the other hand, combined with the user's set eating needs, cooking functions and variety name of the material, it can meet the user's personalized cooking needs, wherein, the eating needs include viscosity, hardness, water content, particle size of food, low sugar, low fat, dietary fiber ratio and trace element content, etc.

Wherein, the attribute information of the received material can be from the touch panel of the cooking appliance or from the associated client.

In addition, those skilled in the art can understand that the wall breaking treatment includes whipping treatment, grinding treatment and extrusion treatment, etc., which cause the cell wall of the material to be broken.

In any of the above-mentioned technical solutions, optionally, the determining device is also used to: when analyzing the attribute information to determine that category of the material to be cooked is fruit and vegetable material, determining corresponding hardness according to category information of the fruit and vegetable material; the determining device is also used to: determining particle size range of cooked material according to hardness of the fruit and vegetable material, preset corresponding relationship between hardness and particle size; and the determining device is also used to: determining corresponding cooking process according to the particle size range, preset corresponding relationship between particle size range and cooking process.

In this technical solution, since the fruit and vegetable material is rich in dietary fiber, and the dietary fiber ratio mainly determines the taste and hardness of the food, according to the hardness of the fruit and vegetable material, the preset corresponding relationship between the hardness and particle size, to determine the particle size range of the cooked material, according to the particle size range, the preset corresponding relationship between the particle size range and the cooking process, to determine the corresponding cooking process, which can provide users with food with the best granularity. In turn, the taste of the food can more satisfy the needs of users, and in order to retain vitamins and minerals to the greatest extent, the cooking power and cooking time are appropriately reduced, which is conducive to improving the user experience.

Specifically, as the whipping time increases, the particle size of the food material gradually decreases, and at the same time, the nutrition of the food material is gradually released. When it reaches a certain level (that is, the optimal particle size range), the fineness of the food material has fully satisfied the user's food requirements, and the nutrient release of the food has reached the peak, if the whipping is continued, the fineness and taste of the food will no longer be significantly improved, and the whipping time will be wasted, and even the loss of nutrients will be caused.

In any of the above-mentioned technical solutions, optionally, the determining device is also used to: when analyzing the attribute information to determine that category of the material to be cooked is a bean material, determining pre-stored nutritional component composition corresponding to the bean material; and the determining device is also used to: determining corresponding cooking process according to nutrient component composition of the bean material, preset corresponding relationship between nutrient component composition and cooking process.

In this technical solution, by determining the pre-stored nutritional component composition corresponding to the bean material, and determining the corresponding cooking process according to the nutritional component composition of the bean material, the preset corresponding relationship between the nutritional component composition and the cooking process. On the one hand, since the high protein content of the bean material, a paste pot may be produced during the high temperature process, which affects the user's taste and experience. Therefore, the heating power in the corresponding cooking process needs to be appropriately reduced to reduce the occurrence of paste pot and overflow. On the other hand, the bean material may produce a large amount of the residue during the cooking process; therefore, the time of the wall breaking treatment needs to be increased in the corresponding cooking process to reduce the generation of the residue, which is conducive to improving the user's taste and the absorption rate of nutrient components.

For example, if the bean material is edamame and the cooking function is preset to "make soy milk", due to its high dietary fiber and high content of flavonoids, after obtaining the default soy milk process, the whipping process time is increased to make the soy milk reach extremely delicate, increase digestion and absorption, lower blood lipids and cholesterol.

For another example, if the bean material is black beans and the cooking function is preset to "make soy milk", due to its high protein and dietary fiber content, after obtaining the default soy milk process, on the one hand, it reduces the power and time period of the heating treatment, on the other hand, it increases the time period of the whipping process to make the soy milk extremely delicate, increase digestion and absorption, and lower blood lipids and cholesterol.

In any of the above-mentioned technical solutions, optionally, the determining device is also used to: when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process.

In this technical solution, when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process. It can further meet the needs of users for healthy diet.

For example, the fruit and vegetable materials are usually rich in dietary fiber, and the dietary fiber (Dietary Fiber, DF) can be divided into two categories: water-soluble dietary fiber (Soluble Dietary Fiber, SDF) and non-water-soluble dietary fiber (Insoluble Dietary Fiber, IDF) according to different solubility. The above dietary fiber ratio refers to the component ratio of water-soluble dietary fiber and non-water-soluble dietary fiber.

The water-soluble dietary fiber (SDF) is a type of non-starch polysaccharide that is not digested by the digestive enzymes of the body, but is soluble in hot water and separated by precipitation with a certain volume of ethanol. The water-soluble dietary fiber mainly refers to the water-soluble storage substances and secretions in plant cells, and also includes some microbial polysaccharides and synthetic polysaccharides. The water-soluble dietary fiber is mainly composed of some glues. The non-water-soluble dietary fiber (IDF) refers to the non-starch structural polysaccharide that is not digested by the digestive enzymes and is insoluble in hot water, it includes cellulose, hemicellulose, lignin, chitosan and vegetable waxes.

The two types of dietary fiber (SDF and IDF) exist at the same time, and their composition has a great relationship with the particle size of the food. As the particle size decreases, the content of non-water-soluble dietary fiber (IDF) gradually decreases, while the content of water-soluble dietary fiber (SDF) gradually increases. This is because during the whipping and crushing process, on the one hand, the soluble components trapped in the fiber network structure are released; on the other hand, the insoluble components gradually become soluble components.

The main function of IDF is to produce mechanical peristaltic effect, promote gastric emptying, promote intestinal peristalsis, and moisturize the bowel. While the SDF exerts more metabolic functions and affects the metabolism of carbohydrates and lipids. It can lower blood lipids, lower cholesterol, lower blood sugar and other effects. There is a proportional relationship between these two components, namely SDF/IDF. Normally, the SDF/IDF is about 1:3 when a reasonable dietary fiber is taken in.

In order to achieve different health effects, the particle size of the food can be controlled by adjusting the parameters of the stirring treatment, and then the SDF/IDF can be adjusted. If the SDF/IDF is slightly higher, it means that the content of SDF is increased, and the food demand is biased towards lowering blood lipids, lowering cholesterol, and lowering blood sugar. If the SDF/IDF is slightly lower, it means that the content of IDF is increasing, and the food demand is biased towards the laxative effect.

In any of the above-mentioned technical solutions, the determining device is also used to: when analyzing the attribute information to determine increase in moisture content of the material to be cooked, the increase in moisture content is the change in moisture content of the material to be cooked after absorbing water within a preset time period; and the determining device is also used to: determining corresponding cooking process according to the change in moisture content, preset corresponding relationship between change in moisture content and cooking process.

In this technical solution, when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process. It can improve the taste of the food and conducive to reducing the power consumption of the cooking appliance.

Specifically, by analyzing the attribute information to determine the increase in moisture content of the material to be cooked, it can be determined that the material is a boil-resistant material or an easy-to-cook material. For example, if a certain type of cereals absorbs water at room temperature for 30 minutes, the increase in moisture content is ΔT<10%, and the time required to reach the saturation of water absorption is t>3h, the cereals are determined to be resistant to cooking.

If a certain type of cereals absorbs water at room temperature for 30 minutes, the increase in moisture content is ΔT>10%, and the time required to reach the saturation of water absorption is t<3h, the cereals are determined to be an easy-to-cook material.

According to the technical solution of the third aspect of the present invention, a cooking appliance is provided, the cooking appliance comprises a cooking device as defined in any of the above-mentioned technical solutions.

According to the technical solution of the fourth aspect of the present invention, a computer readable storage medium is provided, on which a computer program is stored, and when the computer program is executed, cause the computer to carry out the cooking method as defined in any of the above-mentioned technical solutions.

Additional aspects and advantages of the present invention will become apparent in the following description, or are understood by the practice of the present invention.

### BRIEF DESCRIPTION OF THE DRAWINGS

The above and/or additional aspects and advantages of the present invention will become apparent and readily understood from the following description of embodiments in conjunction with the drawings:
Fig. 1 shows a schematic flow diagram of a cooking method according to an embodiment of the present invention;
Fig. 2 shows a schematic block diagram of a cooking device according to an embodiment of the present invention;
Fig. 3 shows a schematic block diagram of a cooking appliance according to an embodiment of the present invention.

### DETAILED DESCRIPTION OF THE EMBODIMENTS

In order that the above-mentioned objectives, features and advantages of the present invention can be understood more clearly, a further detailed description of the present invention will be given below in connection with the accompanying drawings and specific embodiments. It should be noted that the embodiments of the present invention and the features in the embodiments can be combined with each other if there is no conflict.

In the following description, numerous specific details are set forth in order to provide a thorough understanding of the present invention. However, the present invention can also be implemented in other manners than those described herein. Therefore, the protection scope of the present invention is not limited to the specific embodiments disclosed below.

### Embodiment 1:

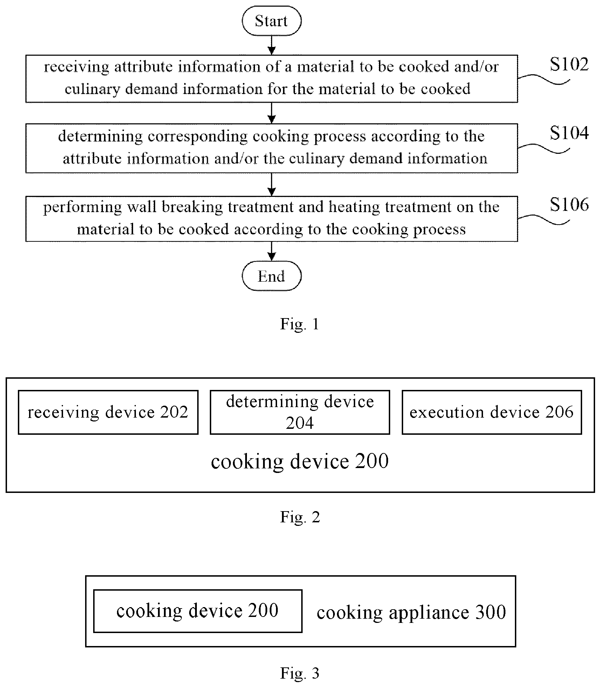

Fig. 1 shows a schematic flow diagram of a cooking method according to an embodiment of the present invention.

As shown in Fig. 1, according to a cooking method of an embodiment of the present invention, comprising: step S102, receiving attribute information of a material to be cooked and/or culinary demand information for the material to be cooked; step S104, determining corresponding cooking process according to the attribute information and/or the culinary demand information; and step S106, performing wall breaking treatment and heating treatment on the material to be cooked according to the cooking process.

In this technical solution, since the attribute information of the material usually includes nutritional component composition, hardness, weight and variety name of the material, etc., the corresponding cooking process is determined according to the attribute information and/or culinary demand information of the material, and the corresponding wall breaking treatment and heating treatment are performed on the material. On the one hand, it can determine whether the material is resistant to cooking according to the nutritional component composition, hardness, weight and variety name of the material. For example, the cooking time and cooking power of the material resistant to cooking can be increased, which can effectively reduce the waiting time of the users, for example, shortening the cooking time and cooking power for materials that are not resistant to cooking can effectively reduce power consumption, and combine the nutritional components to determine the vitamin content, trace element content and dietary fiber content, which can reduce the decomposition and loss of nutrients. On the other hand, combined with the user's set eating needs, cooking functions and variety name of the material, it can meet the user's personalized cooking needs, wherein, the eating needs include viscosity, hardness, water content, particle size of food, low sugar, low fat, dietary fiber ratio and trace element content, etc.

Wherein, the attribute information of the received material can be from the touch panel of the cooking appliance or from the associated client.

In addition, those skilled in the art can understand that the wall breaking treatment includes whipping treatment, grinding treatment and extrusion treatment, etc., which cause the cell wall of the material to be broken.

In any of the above-mentioned technical solutions, optionally, the determining corresponding cooking process according to the attribute information and/or the culinary demand information specifically includes: when analyzing the attribute information to determine that category of the material to be cooked is fruit and vegetable material, determining corresponding hardness according to category information of the fruit and vegetable material; determining particle size range of cooked material according to hardness of the fruit and vegetable material, preset corresponding relationship between hardness and particle size; and determining corresponding cooking process according to the particle size range, preset corresponding relationship between particle size range and cooking process.

In this technical solution, since the fruit and vegetable material is rich in dietary fiber, and the dietary fiber ratio mainly determines the taste and hardness of the food, the preset corresponding relationship between the hardness and particle size according to the hardness of the fruit and vegetable material, to determine the particle size range of the cooked material, and the preset corresponding relationship between the particle size range and the cooking process according to the particle size range, to determine the corresponding cooking process, can provide users with food with the best granularity. Further, the taste of the food can better satisfy the needs of users, and in order to retain vitamins and minerals to the greatest extent, the cooking power and cooking time are appropriately reduced, which is conducive to improving the user experience.

Specifically, as the whipping time increases, the particle size of the food material gradually decreases, and at the same time, the nutrition of the food material is gradually released. When it reaches a certain level (that is, the optimal particle size range), the fineness of the food material has fully satisfied the user's food requirements, and the nutrient release of the food has reached the peak, if the whipping is continued, the fineness and taste of the food will no longer be significantly improved, and the whipping time will be wasted, and even the loss of nutrients will be caused.

### Embodiment 1:

The corresponding relationship between the hardness of the fruit and vegetable material, variety name of the material, optimal particle size range and cooking process can be referred to Table 1 below.

**Table 1**

| classification | hardness | representative ingredients | optimal particle size range | | optimal whipping process |
|---|---|---|---|---|---|
| fruit and vegetable | high | carrot | 240µm~260µm | | (1) Full power whipping for 30-40 seconds; |
| | | | | | (2) Power modulation whipping for 15 seconds; (3) Repeat (1) and (2) step 3 times. |
| | medium | chili | 200µm~220µm | (1) Full power whipping for 30-40 seconds; | |
| | | | | (2) Power modulation whipping for 15 seconds; (3) Full power whipping for 20 seconds; (4) Power modulation whipping for 15 seconds. | |
| | low | kiwi | 160µm~180µm | (1) Full power whipping for 0-40 seconds; | |
| | | | | | (2) Power modulation whipping for 15 seconds; (3) Repeat (1) and (2) step 2 times. |
| cereals | unlimited | corn | 90µm~110µm | (1) Full power whipping for 20-30 seconds; | |
| | | | | | (2) Power modulation whipping for 15 seconds; (3) Repeat (1) and (2) step 3 times. |

Wherein, the motor speed is greater than or equal to 20000 revolutions per minute during full power whipping, and the motor speed is greater than or equal to 15000 revolutions per minute and less than 20000 revolutions per minute during power modulation whipping.

In any of the above-mentioned technical solutions, optionally, the determining corresponding cooking process according to the attribute information and/or the culinary demand information specifically further includes: when analyzing the attribute information to determine that category of the material to be cooked is a bean material, determining pre-stored nutritional component composition corresponding to the bean material; and determining corresponding cooking process according to nutrient component composition of the bean material, preset corresponding relationship between nutrient component composition and cooking process.

In this technical solution, by determining the pre-stored nutritional component composition corresponding to the bean material, and determining the corresponding cooking process according to the nutritional component composition of the bean material, the preset corresponding relationship between the nutritional component composition and the cooking process. On the one hand, since the high protein content of the bean material, a paste pot may be produced during the high temperature process, which affects the user's taste and experience. Therefore, the heating power in the corresponding cooking process needs to be appropriately reduced to reduce the occurrence of paste pot and overflow. On the other hand, the bean material may produce a large amount of the residue during the cooking process; therefore, the time of the wall breaking treatment needs to be increased in the corresponding cooking process to reduce the generation of the residue, which is conducive to improving the user's taste and the absorption rate of nutrient components.

### Embodiment 2:

For example, if the bean material is edamame and the cooking function is preset to "make soy milk", due to its high dietary fiber and high content of flavonoids, after obtaining the default soy milk process, the whipping process time is increased to make the soy milk reach extremely delicate, increase digestion and absorption, lower blood lipids and cholesterol.

Wherein, the cooking process of edamame can refer to the following steps:
(1) Full power heating (greater than or equal to 800 watts) to 93°C.
(2) Power modulation whipping for 30 seconds.
(3) Performing power modulation heating (greater than or equal to 800 watts) for 5 minutes with the first power modulation ratio, and the first power modulation ratio is less than 1 and greater than or equal to 2/3.
(4) Performing power modulation heating (greater than or equal to 800 watts) for 6 minutes with the second power modulation ratio, and the second power modulation ratio is less than 2/3 and greater than or equal to 1/3.
(5) Power modulation whipping for 1 minute.
(6) When the work is over, the buzzer emits a sound signal.

### Embodiment 3:

For another example, if the bean material is black beans and the cooking function is preset to "make soy milk", due to its high protein and dietary fiber content, after obtaining the default soy milk process, on the one hand, it reduces the power and time period of the heating treatment, on the other hand, it increases the time period of the whipping process to make the soy milk extremely delicate, increase digestion and absorption, and lower blood lipids and cholesterol.

Wherein, the cooking process of black beans can refer to the following steps:
(1) Full power heating (greater than or equal to 800 watts) to 93°C.
(2) Performing power modulation heating (greater than or equal to 800 watts) for 5 minutes with the third power modulation ratio, and the third power modulation ratio is less than 1/3 and greater than or equal to 1/5.
(4) Performing power modulation heating (greater than or equal to 800 watts) for 6 minutes with the fourth power modulation ratio, and the fourth power modulation ratio is less than 1 and greater than or equal to 1/3.
(5) Power modulation whipping for 2 minutes.
(6) Full power whipping for 6 minutes.
(7) When the work is over, the buzzer emits a sound signal.

In any of the above-mentioned technical solutions, optionally, the determining corresponding cooking process according to the attribute information and/or the culinary demand information specifically further includes: when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process.

In this technical solution, when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process. It can further meet the needs of users for healthy diet.

For example, the fruit and vegetable materials are usually rich in dietary fiber, and the dietary fiber (Dietary Fiber, DF) can be divided into two categories: water-soluble dietary fiber (Soluble Dietary Fiber, SDF) and non-water-soluble dietary fiber (Insoluble Dietary Fiber, IDF) according to different solubility. The above dietary fiber ratio refers to the component ratio of water-soluble dietary fiber and non-water-soluble dietary fiber.

The water-soluble dietary fiber (SDF) is a type of non-starch polysaccharide that is not digested by the digestive enzymes of the body, but is soluble in hot water and separated by precipitation with a certain volume of ethanol. The water-soluble dietary fiber mainly refers to the water-soluble storage substances and secretions in plant cells, and also includes some microbial polysaccharides and synthetic polysaccharides. The water-soluble dietary fiber is mainly composed of some glues. The non-water-soluble dietary fiber (IDF) refers to the non-starch structural polysaccharide that is not digested by the digestive enzymes and is insoluble in hot water, it includes cellulose, hemicellulose, lignin, chitosan and vegetable waxes.

The two types of dietary fiber (SDF and IDF) exist at the same time, and their composition has a great relationship with the particle size of the food. As the particle size decreases, the content of non-water-soluble dietary fiber (IDF) gradually decreases, while the content of water-soluble dietary fiber (SDF) gradually increases. This is because during the whipping and crushing process, on the one hand, the soluble components trapped in the fiber network structure are released; on the other hand, the insoluble components gradually become soluble components.

The main function of IDF is to produce mechanical peristaltic effect, promote gastric emptying, promote intestinal peristalsis, and moisturize the bowel. While the SDF exerts more metabolic functions and affects the metabolism of carbohydrates and lipids. It can lower blood lipids, lower cholesterol, lower blood sugar and other effects. There is a proportional relationship between these two components, namely SDF/IDF. Normally, the SDF/IDF is about 1:3 when a reasonable dietary fiber is taken in.

In order to achieve different health effects, the particle size of the food can be controlled by adjusting the parameters of the stirring treatment, and then the SDF/IDF can be adjusted. If the SDF/IDF is slightly higher, it means that the content of SDF is increased, and the food demand is biased towards lowering blood lipids, lowering cholesterol, and lowering blood sugar. If the SDF/IDF is slightly lower, it means that the content of IDF is increasing, and the food demand is biased towards the laxative effect.

### Embodiment 4:

The corresponding relationship between the attribute information of the material, the edible requirements (including the health function) and the cooking process can refer to the following Table 2.

**Table 2**

| classification | hardness | representative ingredients | health function | optimal whipping process |
|---|---|---|---|---|
| fruit and vegetable | high | carrot | standard | (1) Full power whipping for 30-40 seconds; |
| | | | | (2) Power modulation whipping for 15 seconds; (3) Repeat (1) and (2) step 3 times. |
| | | | drop three highs (high blood pressure, high blood sugar, high blood lipid) | (1) Full power whipping for 30-40 seconds; |
| | | | | (2) Power modulation whipping for 15 seconds; (3) Repeat (1) and (2) step 5 times. |
| | | | moisturize the bowel | (1) Full power whipping for 20-30 seconds; |
| | | | | (2) Power modulation whipping for 10 seconds; (3) Repeat (1) and (2) step 2 times. |
| | medium | bitter gourd | standard | (1) Full power whipping for 20-30 seconds; |
| | | | | (2) Power modulation whipping for 15 seconds; (3) Repeat (1) and (2) step 3 times. |
| | | | drop three highs (high blood pressure, high blood sugar, high blood lipid) | (1) Full power whipping for 20-30 seconds; |
| | | | | (2) Power modulation whipping for 10 seconds; (3) Repeat (1) and (2) step 5 times. |
| | | | moisturize the bowel | (1) Full power whipping for 20-30 seconds; |
| | | | | (2) Power modulation whipping for 10 seconds; (3) Repeat (1) and (2) step 2 times. |
| | low | celery | standard | (1) Full power whipping for 20-30 seconds; |
| | | | | (2) Power modulation whipping for 5 seconds; (3) Repeat (1) and (2) step 3 times. |
| | | | drop three highs (high blood pressure, high blood sugar, high blood lipid) | (1) Full power whipping for 20-30 seconds; |
| | | | | (2) Power modulation whipping for 5 seconds; (3) Repeat (1) and (2) step 5 times. |
| | | | moisturize the bowel | (1) Full power whipping for 20-30 seconds; |
| | | | | (2) Power modulation whipping for 5 seconds; (3) Repeat (1) and (2) step 2 times. |
| cereals | unlimited | corn | standard | (1) Full power whipping for 20-30 seconds; |
| | | | | (2) Power modulation whipping for 15 seconds; (3) Repeat (1) and (2) step 3 times. |
| | | | drop three highs (high blood pressure, high blood sugar, high blood lipid) | (1) Full power whipping for 20-30 seconds; |
| | | | | (2) Power modulation whipping for 10 seconds; (3) Repeat (1) and (2) step 5 times. |
| | | | moisturize the bowel | (1) Full power whipping for 20-30 seconds; |
| | | | | (2) Power modulation whipping for 10 seconds; (3) Repeat (1) and (2) step 2 times. |

Wherein, the motor speed is greater than or equal to 20000 revolutions per minute during full power whipping, and the motor speed is greater than or equal to 15000 revolutions per minute and less than 20000 revolutions per minute during power modulation whipping.

In any of the above-mentioned technical solutions, the determining corresponding cooking process according to the attribute information and/or the culinary demand information specifically further includes: when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process.

In this technical solution, when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process. It can improve the taste of the food and conducive to reducing the power consumption of the cooking appliance.

### Embodiment 5:

By analyzing the attribute information to determine the increase in moisture content of the material to be cooked, it can be determined that the material is a boil-resistant material or an easy-to-cook material. For example, if a certain type of cereals absorbs water at room temperature for 30 minutes, the increase in moisture content is ΔT<10%, and the time required to reach the saturation of water absorption is t>3h, the cereals are determined to be resistant to cooking, as shown in Table 3.

**Table 3**

| classification | | representative ingredients |
|---|---|---|
| boil- resistant type | cereals | sorghum, barley, wheat, corn |
| | miscellaneous beans | black beans, mung beans, red beans |
| | tubers/seeds | lotus seeds, dried lilies, dried yam |

### Embodiment 6:

If a certain type of cereals absorbs water at room temperature for 30 minutes, the increase in moisture content is ΔT>10%, and the time required to reach the saturation of water absorption is t<3h, the cereals are determined to be an easy-to-cook material, as shown in Table 4.

**Table 4**

| classification | | representative ingredients |
|---|---|---|
| easy-to-cook type | cereals | white rice, brown rice, black rice, red rice, glutinous rice, oats, buckwheat, |
| | miscellaneous beans | soy beans, green beans, |
| | tubers/seeds | sweet potato, purple potato, potato, pumpkin, chestnut, gorgon, |

### Embodiment 7:

The cooking process corresponding to the boil-resistant type materials shown in Table 3 and the easy-to-cook type materials shown in Table 4 can refer to the following steps:
(1) Full power heating (greater than or equal to 800 watts) to 93°C, while whipping at low speed.
(2) Heating the material with power modulation (300 watts to 400 watts) for 3 minutes to 10 minutes, whipping at low speed every minute.
(3) Heating the material with power modulation (200 watts to 300 watts) for 5 minutes to 20 minutes, whipping at low speed every minute.
(4) According to the obtained attribute information, the material is determined to be a boil-resistant type material or an easy-to-cook type material.
(5) If it is a boil-resistant type material, whipped at full speed for 3 minutes, and heated at full power (more than 800 watts) for 2 minutes.
(6) If it is an easy-to-cook type material, it will not be whipped, and heated at full power (more than 800 watts) for 30 seconds to 2 minutes.
(7) When the work is over, the buzzer emits a sound signal.

Fig. 2 shows a schematic block diagram of a cooking device according to an embodiment of the present invention.

As shown in Fig. 2, according to a cooking device 200 of an embodiment of the present invention, comprising: a receiving device 202 used to receive attribute information of a material to be cooked and/or culinary demand information of the material to be cooked; a determining device 204 used to determining corresponding cooking process according to the attribute information and/or the culinary demand information; and an execution device 206 used to perform wall breaking treatment and heating treatment on the material to be cooked according to the cooking process.

In this technical solution, since the attribute information of the material usually includes nutritional component composition, hardness, weight and variety name of the material, etc., the corresponding cooking process is determined according to the attribute information and/or culinary demand information of the material, and the corresponding wall breaking treatment and heating treatment are performed on the material. On the one hand, it can determine whether the material is resistant to cooking according to the nutritional component composition, hardness, weight and variety name of the material. For example, the cooking time and cooking power of the material resistant to cooking can be increased, which can effectively reduce the waiting time of the users, for example, shortening the cooking time and cooking power for materials that are not resistant to cooking can effectively reduce power consumption, and combine the nutritional components to determine the vitamin content, trace element content and dietary fiber content, which can reduce the decomposition and loss of nutrients. On the other hand, combined with the user's set eating needs, cooking functions and variety name of the material, it can meet the user's personalized cooking needs, wherein, the eating needs include viscosity, hardness, water content, particle size of food, low sugar, low fat, dietary fiber ratio and trace element content, etc.

Wherein, the attribute information of the received material can be from the touch panel of the cooking appliance or from the associated client.

In addition, those skilled in the art can understand that the wall breaking treatment includes whipping treatment, grinding treatment and extrusion treatment, etc., which cause the cell wall of the material to be broken.

In any of the above-mentioned technical solutions, optionally, the determining device 204 is also used to: when analyzing the attribute information to determine that category of the material to be cooked is fruit and vegetable material, determining corresponding hardness according to category information of the fruit and vegetable material; the determining device 204 is also used to: determining particle size range of cooked material according to hardness of the fruit and vegetable material, preset corresponding relationship between hardness and particle size; and the determining device 204 is also used to: determining corresponding cooking process according to the particle size range, preset corresponding relationship between particle size range and cooking process.

In this technical solution, since the fruit and vegetable material is rich in dietary fiber, and the dietary fiber ratio mainly determines the taste and hardness of the food, according to the hardness of the fruit and vegetable material, the preset corresponding relationship between the hardness and particle size, to determine the particle size range of the cooked material, according to the particle size range, the preset corresponding relationship between the particle size range and the cooking process, to determine the corresponding cooking process, which can provide users with food with the best granularity. In turn, the taste of the food can more satisfy the needs of users, and in order to retain vitamins and minerals to the greatest extent, the cooking power and cooking time are appropriately reduced, which is conducive to improving the user experience.

Specifically, as the whipping time increases, the particle size of the food material gradually decreases, and at the same time, the nutrition of the food material is gradually released. When it reaches a certain level (that is, the optimal particle size range), the fineness of the food material has fully satisfied the user's food requirements, and the nutrient release of the food has reached the peak, if the whipping is continued, the fineness and taste of the food will no longer be significantly improved, and the whipping time will be wasted, and even the loss of nutrients will be caused.

In any of the above-mentioned technical solutions, optionally, the determining device 204 is also used to: when analyzing the attribute information to determine that category of the material to be cooked is a bean material, determining pre-stored nutritional component composition corresponding to the bean material; and the determining device 204 is also used to: determining corresponding cooking process according to nutrient component composition of the bean material, preset corresponding relationship between nutrient component composition and cooking process.

In this technical solution, by determining the pre-stored nutritional component composition corresponding to the bean material, and determining the corresponding cooking process according to the nutritional component composition of the bean material, the preset corresponding relationship between the nutritional component composition and the cooking process. On the one hand, since the high protein content of the bean material, a paste pot may be produced during the high temperature process, which affects the user's taste and experience. Therefore, the heating power in the corresponding cooking process needs to be appropriately reduced to reduce the occurrence of paste pot and overflow. On the other hand, the bean material may produce a large amount of the residue during the cooking process; therefore, the time of the wall breaking treatment needs to be increased in the corresponding cooking process to reduce the generation of the residue, which is conducive to improving the user's taste and the absorption rate of nutrient components.

For example, if the bean material is edamame and the cooking function is preset to "make soy milk", due to its high dietary fiber and high content of flavonoids, after obtaining the default soy milk process, the whipping process time is increased to make the soy milk reach extremely delicate, increase digestion and absorption, lower blood lipids and cholesterol.

For another example, if the bean material is black beans and the cooking function is preset to "make soy milk", due to its high protein and dietary fiber content, after obtaining the default soy milk process, on the one hand, it reduces the power and time period of the heating treatment, on the other hand, it increases the time period of the whipping process to make the soy milk extremely delicate, increase digestion and absorption, and lower blood lipids and cholesterol.

In any of the above-mentioned technical solutions, optionally, the determining device 204 is also used to: when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process.

In this technical solution, when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process. It can further meet the needs of users for healthy diet.

For example, the fruit and vegetable materials are usually rich in dietary fiber, and the dietary fiber (Dietary Fiber, DF) can be divided into two categories: water-soluble dietary fiber (Soluble Dietary Fiber, SDF) and non-water-soluble dietary fiber (Insoluble Dietary Fiber, IDF) according to different solubility. The above dietary fiber ratio refers to the component ratio of water-soluble dietary fiber and non-water-soluble dietary fiber.

The water-soluble dietary fiber (SDF) is a type of non-starch polysaccharide that is not digested by the digestive enzymes of the body, but is soluble in hot water and separated by precipitation with a certain volume of ethanol. The water-soluble dietary fiber mainly refers to the water-soluble storage substances and secretions in plant cells, and also includes some microbial polysaccharides and synthetic polysaccharides. The water-soluble dietary fiber is mainly composed of some glues. The non-water-soluble dietary fiber (IDF) refers to the non-starch structural polysaccharide that is not digested by the digestive enzymes and is insoluble in hot water, it includes cellulose, hemicellulose, lignin, chitosan and vegetable waxes.

The two types of dietary fiber (SDF and IDF) exist at the same time, and their composition has a great relationship with the particle size of the food. As the particle size decreases, the content of non-water-soluble dietary fiber (IDF) gradually decreases, while the content of water-soluble dietary fiber (SDF) gradually increases. This is because during the whipping and crushing process, on the one hand, the soluble components trapped in the fiber network structure are released; on the other hand, the insoluble components gradually become soluble components.

The main function of IDF is to produce mechanical peristaltic effect, promote gastric emptying, promote intestinal peristalsis, and moisturize the bowel. While the SDF exerts more metabolic functions and affects the metabolism of carbohydrates and lipids. It can lower blood lipids, lower cholesterol, lower blood sugar and other effects. There is a proportional relationship between these two components, namely SDF/IDF. Normally, the SDF/IDF is about 1:3 when a reasonable dietary fiber is taken in.

In order to achieve different health effects, the particle size of the food can be controlled by adjusting the parameters of the stirring treatment, and then the SDF/IDF can be adjusted. If the SDF/IDF is slightly higher, it means that the content of SDF is increased, and the food demand is biased towards lowering blood lipids, lowering cholesterol, and lowering blood sugar. If the SDF/IDF is slightly lower, it means that the content of IDF is increasing, and the food demand is biased towards the laxative effect.

In any of the above-mentioned technical solutions, the determining device 204 is also used to: when analyzing the attribute information to determine increase in moisture content of the material to be cooked, the increase in moisture content is the change in moisture content of the material to be cooked after absorbing water within a preset time period; and the determining device 204 is also used to: determining corresponding cooking process according to the change in moisture content, preset corresponding relationship between change in moisture content and cooking process.

In this technical solution, when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process. It can improve the taste of the food and conducive to reducing the power consumption of the cooking appliance.

Specifically, by analyzing the attribute information to determine the increase in moisture content of the material to be cooked, it can be determined that the material is a boil-resistant material or an easy-to-cook material. For example, if a certain type of cereals absorbs water at room temperature for 30 minutes, the increase in moisture content is △T<10%, and the time required to reach the saturation of water absorption is t>3h, the cereals are determined to be resistant to cooking.

If a certain type of cereals absorbs water at room temperature for 30 minutes, the increase in moisture content is ΔT>10%, and the time required to reach the saturation of water absorption is t<3h, the cereals are determined to be an easy-to-cook material.

Fig. 3 shows a schematic block diagram of a cooking appliance according to an embodiment of the present invention.

As shown in Fig. 3, according to a cooking appliance 300 of an embodiment of the present invention, comprising the cooking device 200 as defined in any one of the above-mentioned technical solutions.

Wherein, the cooking device 200 may include logic computing devices such as MCU, CPU, DSP, single-chip microcomputer and embedded equipment, and the receiving device 202 may include touch screen, buttons, voice recognizer and communication antenna, etc. The determining device 204 may include a comparator and a memory, etc., the execution device 206 may include a heating drive circuit and a corresponding heating component, a stirring drive circuit and a corresponding stirring component, a hammering drive circuit and a corresponding hammering component, a grinding drive circuit and a corresponding grinding components.

### Embodiment 8:

According to a computer readable storage medium of an embodiment of the present invention, on which a computer program is stored, and when the computer program is executed, cause the computer to carry out the cooking method as defined in any of the above-mentioned technical solutions, the cooking method comprises: receiving attribute information of a material to be cooked and/or culinary demand information for the material to be cooked; determining corresponding cooking process according to the attribute information and/or the culinary demand information; and performing wall breaking treatment and heating treatment on the material to be cooked according to the cooking process.

In this technical solution, since the attribute information of the material usually includes nutritional component composition, hardness, weight and variety name of the material, etc., the corresponding cooking process is determined according to the attribute information and/or culinary demand information of the material, and the corresponding wall breaking treatment and heating treatment are performed on the material. On the one hand, it can determine whether the material is resistant to cooking according to the nutritional component composition, hardness, weight and variety name of the material. For example, the cooking time and cooking power of the material resistant to cooking can be increased, which can effectively reduce the waiting time of the users, for example, shortening the cooking time and cooking power for materials that are not resistant to cooking can effectively reduce power consumption, and combine the nutritional components to determine the vitamin content, trace element content and dietary fiber content, which can reduce the decomposition and loss of nutrients. On the other hand, combined with the user's set eating needs, cooking functions and variety name of the material, it can meet the user's personalized cooking needs, wherein, the eating needs include viscosity, hardness, water content, particle size of food, low sugar, low fat, dietary fiber ratio and trace element content, etc.

Wherein, the attribute information of the received material can be from the touch panel of the cooking appliance or from the associated client.

In addition, those skilled in the art can understand that the wall breaking treatment includes whipping treatment, grinding treatment and extrusion treatment, etc., which cause the cell wall of the material to be broken.

In any of the above-mentioned technical solutions, optionally, the determining corresponding cooking process according to the attribute information and/or the culinary demand information specifically includes: when analyzing the attribute information to determine that category of the material to be cooked is fruit and vegetable material, determining corresponding hardness according to category information of the fruit and vegetable material; determining particle size range of cooked material according to hardness of the fruit and vegetable material, preset corresponding relationship between hardness and particle size; and determining corresponding cooking process according to the particle size range, preset corresponding relationship between particle size range and cooking process.

In this technical solution, since the fruit and vegetable material is rich in dietary fiber, and the dietary fiber ratio mainly determines the taste and hardness of the food, according to the hardness of the fruit and vegetable material, the preset corresponding relationship between the hardness and particle size, to determine the particle size range of the cooked material, according to the particle size range, the preset corresponding relationship between the particle size range and the cooking process, to determine the corresponding cooking process, which can provide users with food with the best granularity. In turn, the taste of the food can more satisfy the needs of users, and in order to retain vitamins and minerals to the greatest extent, the cooking power and cooking time are appropriately reduced, which is conducive to improving the user experience.

Specifically, as the whipping time increases, the particle size of the food material gradually decreases, and at the same time, the nutrition of the food material is gradually released. When it reaches a certain level (that is, the optimal particle size range), the fineness of the food material has fully satisfied the user's food requirements, and the nutrient release of the food has reached the peak, if the whipping is continued, the fineness and taste of the food will no longer be significantly improved, and the whipping time will be wasted, and even the loss of nutrients will be caused.

In any of the above-mentioned technical solutions, optionally, the determining corresponding cooking process according to the attribute information and/or the culinary demand information specifically further includes: when analyzing the attribute information to determine that category of the material to be cooked is a bean material, determining pre-stored nutritional component composition corresponding to the bean material; and determining corresponding cooking process according to nutrient component composition of the bean material, preset corresponding relationship between nutrient component composition and cooking process.

In this technical solution, by determining the pre-stored nutritional component composition corresponding to the bean material, and determining the corresponding cooking process according to the nutritional component composition of the bean material, the preset corresponding relationship between the nutritional component composition and the cooking process. On the one hand, since the high protein content of the bean material, a paste pot may be produced during the high temperature process, which affects the user's taste and experience. Therefore, the heating power in the corresponding cooking process needs to be appropriately reduced to reduce the occurrence of paste pot and overflow. On the other hand, the bean material may produce a large amount of the residue during the cooking process; therefore, the time of the wall breaking treatment needs to be increased in the corresponding cooking process to reduce the generation of the residue, which is conducive to improving the user's taste and the absorption rate of nutrient components.

For example, if the bean material is edamame and the cooking function is preset to "make soy milk", due to its high dietary fiber and high content of flavonoids, after obtaining the default soy milk process, the whipping process time is increased to make the soy milk reach extremely delicate, increase digestion and absorption, lower blood lipids and cholesterol.

For another example, if the bean material is black beans and the cooking function is preset to "make soy milk", due to its high protein and dietary fiber content, after obtaining the default soy milk process, on the one hand, it reduces the power and time period of the heating treatment, on the other hand, it increases the time period of the whipping process to make the soy milk extremely delicate, increase digestion and absorption, and lower blood lipids and cholesterol.

In any of the above-mentioned technical solutions, optionally, the determining corresponding cooking process according to the attribute information and/or the culinary demand information specifically further includes: when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process.

In this technical solution, when analyzing the attribute information to determine category of the material to be cooked, and analyzing the culinary demand information to determine nutritional effect required by the user, determining corresponding cooking process according to the category, the nutritional effect, and preset corresponding relationship between the nutritional effect under any of the categories and cooking process. It can further meet the needs of users for healthy diet.

For example, the fruit and vegetable materials are usually rich in dietary fiber, and the dietary fiber (Dietary Fiber, DF) can be divided into two categories: water-soluble dietary fiber (Soluble Dietary Fiber, SDF) and non-water-soluble dietary fiber (Insoluble Dietary Fiber, IDF) according to different solubility. The above dietary fiber ratio refers to the component ratio of water-soluble dietary fiber and non-water-soluble dietary fiber.

The water-soluble dietary fiber (SDF) is a type of non-starch polysaccharide that is not digested by the digestive enzymes of the body, but is soluble in hot water and separated by precipitation with a certain volume of ethanol. The water-soluble dietary fiber mainly refers to the water-soluble storage substances and secretions in plant cells, and also includes some microbial polysaccharides and synthetic polysaccharides. The water-soluble dietary fiber is mainly composed of some glues. The non-water-soluble dietary fiber (IDF) refers to the non-starch structural polysaccharide that is not digested by the digestive enzymes and is insoluble in hot water, it includes cellulose, hemicellulose, lignin, chitosan and vegetable waxes.

The two types of dietary fiber (SDF and IDF) exist at the same time, and their composition has a great relationship with the particle size of the food. As the particle size decreases, the content of non-water-soluble dietary fiber (IDF) gradually decreases, while the content of water-soluble dietary fiber (SDF) gradually increases. This is because during the whipping and crushing process, on the one hand, the soluble components trapped in the fiber network structure are released; on the other hand, the insoluble components gradually become soluble components.

The main function of IDF is to produce mechanical peristaltic effect, promote gastric emptying, promote intestinal peristalsis, and moisturize the bowel. While the SDF exerts more metabolic functions and affects the metabolism of carbohydrates and lipids. It can lower blood lipids, lower cholesterol, lower blood sugar and other effects. There is a proportional relationship between these two components, namely SDF/IDF. Normally, the SDF/IDF is about 1:3 when a reasonable dietary fiber is taken in.

In order to achieve different health effects, the particle size of the food can be controlled by adjusting the parameters of the stirring treatment, and then the SDF/IDF can be adjusted. If the SDF/IDF is slightly higher, it means that the content of SDF is increased, and the food demand is biased towards lowering blood lipids, lowering cholesterol, and lowering blood sugar. If the SDF/IDF is slightly lower, it means that the content of IDF is increasing, and the food demand is biased towards the laxative effect.

In any of the above-mentioned technical solutions, the determining corresponding cooking process according to the attribute information and/or the culinary demand information specifically further includes: when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process.

In this technical solution, when analyzing the attribute information to determine increase in moisture content of the material to be cooked, the increase in moisture content is the change in moisture content of the material to be cooked after absorbing water within a preset time period; and determining corresponding cooking process according to the change in moisture content, preset corresponding relationship between change in moisture content and cooking process. It can improve the taste of the food and conducive to reducing the power consumption of the cooking appliance.

Specifically, by analyzing the attribute information to determine the increase in moisture content of the material to be cooked, it can be determined that the material is a boil-resistant material or an easy-to-cook material. For example, if a certain type of cereals absorbs water at room temperature for 30 minutes, the increase in moisture content is △T<10%, and the time required to reach the saturation of water absorption is t>3h, the cereals are determined to be resistant to cooking.

If a certain type of cereals absorbs water at room temperature for 30 minutes, the increase in moisture content is △T>10%, and the time required to reach the saturation of water absorption is t<3h, the cereals are determined to be an easy-to-cook material.

The technical solution of the present invention is described in detail above in conjunction with the accompanying drawings. The present invention proposes a cooking method, a cooking device, a cooking appliance and a computer readable storage medium. Since the attribute information of the material usually includes nutritional component composition, hardness, weight and variety name of the material, etc., the corresponding cooking process is determined according to the attribute information and/or culinary demand information of the material, and the corresponding wall breaking treatment and heating treatment are performed on the material. On the one hand, it can determine whether the material is resistant to cooking according to the nutritional component composition, hardness, weight and variety name of the material. For example, the cooking time and cooking power of the material resistant to cooking can be increased, which can effectively reduce the waiting time of the users, for example, shortening the cooking time and cooking power for materials that are not resistant to cooking can effectively reduce power consumption, and combine the nutritional components to determine the vitamin content, trace element content and dietary fiber content, which can reduce the decomposition and loss of nutrients. On the other hand, combined with the user's set eating needs, cooking functions and variety name of the material, it can meet the user's personalized cooking needs.

The descriptions above are only preferred embodiments of the present invention, which are not used to limit the present invention. For a person skilled in the art, the present invention may have various changes and variations.

## Claims

1. A cooking method, comprising:
receiving attribute information of a material to be cooked for the material to be cooked (S102);
determining corresponding cooking process according to the attribute information; and
performing wall breaking treatment and heating treatment on the material to be cooked according to the cooking process (S106), **characterized in that**
the determining corresponding cooking process according to the attribute information specifically further includes:
when analyzing the attribute information to determine increase in moisture content of the material to be cooked, the increase in moisture content is the change in moisture content of the material to be cooked after absorbing water within a preset time period; and
determining corresponding cooking process according to the change in moisture content, preset corresponding relationship between change in moisture content and cooking process, wherein the cooking process includes the following steps:
(1) Full power heating with greater than or equal to 800 watts to 93°C, while whipping at low speed;
(2) Heating the material with power modulation with 300 watts to 400 watts for 3 minutes to 10 minutes, whipping at low speed every minute;
(3) Heating the material with power modulation with 200 watts to 300 watts for 5 minutes to 20 minutes, whipping at low speed every minute;
(4) According to the obtained attribute information, the material is determined to be a boil-resistant type material or an easy-to-cook type material;
(5) If it is a boil-resistant type material, whipped at full speed for 3 minutes, and heated at full power with more than 800 watts for 2 minutes;
(6) If it is an easy-to-cook type material, it will not be whipped, and heated at full power with more than 800 watts for 30 seconds to 2 minutes;
(7) When the work is over, the buzzer emits a sound signal.

2. The cooking method according to claim 1, wherein
the determining corresponding cooking process according to the attribute information specifically includes:
when analyzing the attribute information to determine that category of the material to be cooked is fruit and vegetable material, determining corresponding hardness according to category information of the fruit and vegetable material;
determining particle size range of cooked material according to hardness of the fruit and vegetable material, preset corresponding relationship between hardness and particle size; and
determining corresponding cooking process according to the particle size range, preset corresponding relationship between particle size range and cooking process.

3. The cooking method according to claim 1, wherein
the determining corresponding cooking process according to the attribute information specifically further includes:
when analyzing the attribute information to determine that category of the material to be cooked is a bean material, determining pre-stored nutritional component composition corresponding to the bean material; and
determining corresponding cooking process according to nutrient component composition of the bean material, preset corresponding relationship between nutrient component composition and cooking process.

4. A cooking device (200), comprising:
a receiving device (202) used to receive attribute information of a material to be cooked;
a determining device (204) used to determine corresponding cooking process according to the attribute information; and
an execution device (206) used to perform wall breaking treatment and heating treatment on the material to be cooked according to the cooking process, **characterized in that**
the determining device (204) is also used to: when analyzing the attribute information to determine increase in moisture content of the material to be cooked, the increase in moisture content is the change in moisture content of the material to be cooked after absorbing water within a preset time period; and
the determining device (204) is also used to: determining corresponding cooking process according to the change in moisture content, preset corresponding relationship between change in moisture content and cooking process, wherein the cooking process includes the following steps:
(1) Full power heating with greater than or equal to 800 watts to 93°C, while whipping at low speed;
(2) Heating the material with power modulation with 300 watts to 400 watts for 3 minutes to 10 minutes, whipping at low speed every minute;
(3) Heating the material with power modulation with 200 watts to 300 watts for 5 minutes to 20 minutes, whipping at low speed every minute;
(4) According to the obtained attribute information, the material is determined to be a boil-resistant type material or an easy-to-cook type material;
(5) If it is a boil-resistant type material, whipped at full speed for 3 minutes, and heated at full power with more than 800 watts for 2 minutes;
(6) If it is an easy-to-cook type material, it will not be whipped, and heated at full power with more than 800 watts for 30 seconds to 2 minutes;
(7) When the work is over, the buzzer emits a sound signal.

5. The cooking device (200) according to claim 4, wherein
the determining device (204) is also used to: when analyzing the attribute information to determining that category of the material to be cooked is fruit and vegetable material, determine corresponding hardness according to category information of the fruit and vegetable material;
the determining device (204) is also used to: determining particle size range of cooked material according to hardness of the fruit and vegetable material, preset corresponding relationship between hardness and particle size; and
the determining device (204) is also used to: determining corresponding cooking process according to the particle size range, preset corresponding relationship between particle size range and cooking process.

6. The cooking device (200) according to claim 4, wherein
the determining device (204) is also used to: when analyzing the attribute information to determine that category of the material to be cooked is a bean material, determining pre-stored nutritional component composition corresponding to the bean material; and
the determining device (204) is also used to: determining corresponding cooking process according to nutrient component composition of the bean material, preset corresponding relationship between nutrient component composition and cooking process.

7. A cooking appliance, comprising: the cooking device (200) according to any one of claims 4 to 6.

8. A computer readable storage medium with a computer program stored thereon, wherein,
when the computer program is executed by a cooking device according to claim 4, cause the cooking device to carry out the cooking method according to any one of claims 1 to 3.

## Patentansprüche

1. Ein Garverfahren, umfassend:
Erfassen von Eigenschaftsinformationen eines Kochgutes für das zu kochende Material (S102);
Bestimmen eines entsprechenden Kochprozesses gemäß der Eigenschaftsinformation; und Durchführen einer Aufbrechbehandlung und einer Wärmebehandlung an dem zu kochenden Material gemäß dem Kochprozess (S106),
**dadurch gekennzeichnet, dass** das Bestimmen des entsprechenden Kochprozesses gemäß der Eigenschaftsinformation insbesondere weiterhin umfasst:
dass die Zunahme des Feuchtigkeitsgehalts die Änderung des Feuchtigkeitsgehalts des zu kochenden Materials nach der Absorption von Wasser innerhalb einer Voreinstellzeit ist, wenn die Eigenschaftsinformation analysiert wird, um eine Zunahme des Feuchtigkeitsgehalts des zu kochenden Materials zu bestimmen; und
Bestimmen eines entsprechenden Kochprozesses gemäß der Änderung des Feuchtigkeitsgehalts, und Voreinstellen einer entsprechenden Beziehung zwischen der Änderung des Feuchtigkeitsgehalts und dem Kochprozess, wobei der Kochprozess die folgenden Schritte aufweist:
(1) Erhitzen bei voller Leistung mit mehr als oder gleich 800 Watt auf 93°C, während bei niedriger Geschwindigkeit aufgeschlagen wird;
(2) Erhitzen des Materials bei einer modulierten Leistung mit 300 Watt bis 400 Watt für 3 Minuten bis 10 Minuten, wobei in jeder Minute mit niedriger Geschwindigkeit aufgeschlagen wird;
(3) Erhitzen des Materials bei einer modulierten Leistung von 200 bis 300 Watt für 5 bis 20 Minuten, wobei in jeder Minute mit niedriger Geschwindigkeit aufgeschlagen wird;
(4) Bestimmen anhand der erhaltenen Eigenschaftsinformationen, ob es sich bei dem Material um ein kochfestes oder ein leicht kochbares Material handelt;
(5) Wenn es sich um ein kochfestes Material handelt, wird es 3 Minuten lang bei voller Geschwindigkeit aufgeschlagen und 2 Minuten lang bei voller Leistung mit mehr als 800 Watt erhitzt;
(6) Wenn es sich um ein leicht kochendes Material handelt, wird es nicht aufgeschlagen und bei voller Leistung mit mehr als 800 Watt 30 Sekunden bis 2 Minuten lang erhitzt;
(7) Nachdem die Arbeit beendet ist, gibt der Summer ein akustisches Signal ab.

2. Das Garverfahren nach Anspruch 1, wobei
das Bestimmen des entsprechenden Garvorgangs gemäß der Eigenschaftsinformation insbesondere aufweist:
beim Analysieren der Eigenschaftsinformation zum Bestimmen, ob es sich bei der Kategorie des zu kochenden Materials um Obst- und Gemüsematerial handelt, das Bestimmen der entsprechenden Härte gemäß der Kategorieinformation des Obst- und Gemüsematerials;
Bestimmen des Partikelgrößenbereichs des gekochten Materials entsprechend der Härte des Obst- und Gemüsematerials, Voreinstellen der entsprechenden Beziehung zwischen Härte und Partikelgröße; und
Bestimmen des entsprechenden Kochprozesses gemäß dem Partikelgrößenbereich, Voreinstellen einer entsprechenden Beziehung zwischen dem Partikelgrößenbereich und dem Kochprozess.

3. Das Garverfahren nach Anspruch 1, wobei
das Bestimmen des entsprechenden Garprozesses gemäß der Eigenschaftsinformation insbesondere ferner aufweist:
beim Analysieren der Eigenschaftsinformationen zum Bestimmen, ob es sich bei der Kategorie des zu kochenden Materials um ein Bohnenmaterial handelt, das Bestimmen der vorgespeicherten Nährstoffkomponentenzusammensetzung entsprechend dem Bohnenmaterial; und
Bestimmen des entsprechenden Kochprozesses gemäß der Nährstoffkomponentenzusammensetzung des Bohnenmaterials, Voreinstellen einer entsprechenden Beziehung zwischen der Nährstoffkomponentenzusammensetzung und dem Kochprozess.

4. Eine Garvorrichtung (200), umfassend:
eine Aufnahmeeinrichtung (202), die eingesetzt wird, um Eigenschaftsinformationen eines zu kochenden Materials zu erfassen;
eine Bestimmungseinrichtung (204), die eingesetzt wird, um einen entsprechenden Garprozess gemäß der Eigenschaftsinformation zu bestimmen; und
eine Ausführungsvorrichtung (206), die eingesetzt wird, um eine Aufbrechbehandlung und eine Erwärmungsbehandlung an dem zu kochenden Material gemäß dem Kochprozess durchzuführen,
**dadurch gekennzeichnet, dass** die Bestimmungseinrichtung (204) auch eingesetzt wird, um eine Zunahme des Feuchtigkeitsgehalts des zu kochenden Materials zu bestimmen,
wobei die Zunahme des Feuchtigkeitsgehalts die Änderung des Feuchtigkeitsgehalts des zu kochenden Materials nach der Absorption von Wasser innerhalb einer Voreinstellungszeitspanne ist, wenn die Eigenschaftsinformation analysiert wird; und
die Bestimmungseinrichtung (204) auch eingesetzt wird zum Bestimmen eines entsprechenden Kochprozesses gemäß der Änderung des Feuchtigkeitsgehalts, und zum Voreinstellen einer entsprechenden Beziehung zwischen der Änderung des Feuchtigkeitsgehalts und dem Kochprozess, wobei der Kochprozess die folgenden Schritte aufweist:
(1) Erhitzen bei voller Leistung mit mehr als oder gleich 800 Watt auf 93°C, während bei niedriger Geschwindigkeit aufgeschlagen wird;
(2) Erhitzen des Materials bei einer modulierten Leistung von 300 Watt bis 400 Watt für 3 Minuten bis 10 Minuten, wobei jede Minute mit niedriger Geschwindigkeit aufgeschlagen wird;
(3) Erhitzen des Materials bei einer modulierten Leistung von 200 bis 300 Watt für 5 bis 20 Minuten, wobei in jeder Minute mit niedriger Geschwindigkeit aufgeschlagen wird;
(4) Bestimmen anhand der erhaltenen Eigenschaftsinformationen, ob es sich bei dem Material um ein kochfestes oder ein leicht kochbares Material handelt;
(5) Wenn es sich um ein kochfestes Material handelt, wird es 3 Minuten lang bei voller Geschwindigkeit aufgeschlagen und 2 Minuten lang bei voller Leistung mit mehr als 800 Watt erhitzt;
(6) Wenn es sich um ein leicht kochendes Material handelt, wird es nicht aufgeschlagen und bei voller Leistung mit mehr als 800 Watt 30 Sekunden bis 2 Minuten lang erhitzt;
(7) Nachdem die Arbeit beendet ist, gibt der Summer ein akustisches Signal ab.

5. Die Garvorrichtung (200) nach Anspruch 4, wobei
die Bestimmungseinrichtung (204) auch eingesetzt wird, um beim Analysieren der Eigenschaftsinformation zum Bestimmen, ob die Kategorie des zu kochenden Materials Obst- und Gemüsematerial ist, die entsprechende Härte gemäß der Kategorieinformation des Obst- und Gemüsematerials zu bestimmen;
die Bestimmungseinrichtung (204) wird auch eingesetzt, um: den Partikelgrößenbereich des gekochten Materials entsprechend der Härte des Obst- und Gemüsematerials zu bestimmen, die entsprechende Beziehung zwischen Härte und Partikelgröße voreinzustellen; und
die Bestimmungseinrichtung (204) wird auch eingesetzt zum Bestimmen des entsprechenden Kochprozesses gemäß dem Partikelgrößenbereich, und zum Voreinstellen der entsprechenden Beziehung zwischen dem Partikelgrößenbereich und dem Kochprozess.

6. Die Garvorrichtung (200) nach Anspruch 4, wobei
die Bestimmungseinrichtung (204) auch eingesetzt wird, um beim Analysieren der Eigenschaftsinformationen zum Bestimmen, ob die Kategorie des zu kochenden Materials ein Bohnenmaterial ist, eine vorgespeicherte Nährstoffzusammensetzung zu bestimmen, die dem Bohnenmaterial entspricht; und
die Bestimmungseinrichtung (204) wird auch eingesetzt zum Bestimmen des entsprechenden Kochprozesses gemäß der Nährstoffkomponentenzusammensetzung des Bohnenmaterials, und zum Voreinstellen der entsprechenden Beziehung zwischen der Nährstoffkomponentenzusammensetzung und dem Kochprozess.

7. Ein Gargerät, umfassend die Garvorrichtung (200) nach einem der Ansprüche 4 bis 6.

8. Ein computerlesbares Speichermedium mit einem darauf gespeicherten Computerprogramm, wobei, wenn das Computerprogramm von einer Garvorrichtung nach Anspruch 4 ausgeführt wird, das Computerprogramm die Garvorrichtung veranlasst, das Garverfahren nach einem der Ansprüche 1 bis 3 auszuführen.

## Revendications

1. Procédé de cuisson, comprenant :
la réception d'informations d'attribut d'une matière à cuire pour la matière à cuire (S102) ;
la détermination d'un procédé de cuisson correspondant en fonction des informations d'attribut ; et
l'exécution d'un traitement de rupture de paroi et d'un traitement thermique sur la matière à cuire en fonction du procédé de cuisson (S106), **caractérisé en ce que**
la détermination du procédé de cuisson correspondant en fonction des informations d'attribut comprend en outre spécifiquement :
lors de l'analyse des informations d'attribut afin de déterminer l'augmentation de la teneur en humidité de la matière à cuire, l'augmentation de la teneur en humidité est le changement dans la teneur en humidité de la matière à cuire après l'absorption d'eau à l'intérieur d'une période de temps prédéfinie ; et
la détermination du procédé de cuisson correspondant en fonction du changement dans la teneur en humidité, de la relation correspondante prédéfinie entre un changement dans la teneur en humidité et le procédé de cuisson, le procédé de cuisson comprenant les étapes suivantes :
(1) chauffage à pleine puissance avec 800 watts ou plus à 93°C, tout en battant à basse vitesse ;
(2) chauffage de la matière avec modulation de puissance à 300 watts à 400 watts durant 3 minutes à 10 minutes, battage à basse vitesse chaque minute ;
(3) chauffage de la matière avec modulation de puissance à 200 watts à 300 watts durant 5 minutes à 20 minutes, battage à basse vitesse chaque minute ;
(4) en fonction des informations d'attribut obtenues, il est déterminé que la matière est une matière de type résistante à l'ébullition ou une matière de type facile à cuire ;
(5) s'il s'agit d'une matière de type résistante à l'ébullition, battue à pleine vitesse durant 3 minutes, et chauffée à pleine puissance à plus de 800 watts durant 2 minutes ;
(6) s'il s'agit d'une matière de type facile à cuire, elle ne sera pas battue, et chauffée à pleine puissance à plus de 800 watts durant 30 secondes à 2 minutes ;
(7) lorsque le travail est terminé, l'alarme émet un signal sonore.

2. Procédé de cuisson selon la revendication 1,
la détermination du procédé de cuisson correspondant en fonction des informations d'attribut comprenant spécifiquement :
lors de l'analyse des informations d'attribut afin de déterminer qu'une catégorie de la matière à cuire est une matière fruit et légume, une détermination de la dureté correspondante en fonction des informations de catégorie de la matière fruit et légume ;
la détermination de la plage de tailles de particules de la matière cuite en fonction d'une dureté de la matière fruit et légume, d'une relation correspondante prédéfinie entre dureté et taille de particule ; et
la détermination du procédé de cuisson correspondant en fonction de la plage de tailles de particules, une relation correspondante prédéfinie entre une plage de tailles de particules et un procédé de cuisson.

3. Procédé de cuisson selon la revendication 1,
la détermination du procédé de cuisson correspondant en fonction des informations d'attribut comprenant en outre spécifiquement :
lors de l'analyse des informations d'attribut afin de déterminer qu'une catégorie de la matière à cuire est une matière légumineuse, une détermination d'une composition de composant nutritif pré-stocké correspondant à la matière légumineuse ; et
une détermination d'un procédé de cuisson correspondant en fonction d'une composition de composant nutritif de la matière légumineuse, d'une relation correspondante prédéfinie entre une composition de composant nutritif et un procédé de cuisson.

4. Dispositif de cuisson (200), comprenant :
un dispositif de réception (202) utilisé pour recevoir des informations d'attribut d'une matière à cuire ;
un dispositif de détermination (204) utilisé pour déterminer un procédé de cuisson correspondant en fonction des informations d'attribut ; et
un dispositif d'exécution (206) utilisé pour effectuer un traitement de rupture de paroi et un traitement thermique sur la matière à cuire en fonction du procédé de cuisson, **caractérisé en ce que**
le dispositif de détermination (204) est également utilisé pour : lors de l'analyse des informations d'attribut afin de déterminer l'augmentation dans la teneur en humidité de la matière à cuire, l'augmentation dans la teneur en humidité est le changement dans la teneur en humidité de la matière à cuire après absorption d'eau à l'intérieur d'une période de temps prédéfinie ; et
le dispositif de détermination (204) est également utilisé pour : déterminer un procédé de cuisson correspondant en fonction du changement dans la teneur en humidité, une relation correspondante prédéfinie entre un changement dans une teneur en humidité et un procédé de cuisson, le procédé de cuisson comprenant les étapes suivantes :
(1) chauffage à pleine puissance à 800 watts ou plus à 93°C, tout en battant à basse vitesse ;
(2) chauffage de la matière avec modulation de puissance à 300 watts à 400 watts durant 3 minutes à 10 minutes, battage à basse vitesse chaque minute ;
(3) chauffage de la matière avec modulation de puissance à 200 watts à 300 watts durant 5 minutes à 20 minutes, battage à basse vitesse chaque minute ;
(4) en fonction des informations d'attribut obtenues, il est déterminé que la matière est une matière de type résistante à l'ébullition ou une matière de type facile à cuire ;
(5) s'il s'agit d'une matière de type résistante à l'ébullition, battue à pleine vitesse durant 3 minutes, et chauffée à pleine puissance avec plus de 800 watts durant 2 minutes ;
(6) s'il s'agit d'une matière de type facile à cuire, elle ne sera pas battue, et chauffée à pleine puissance à plus de 800 watts durant 30 secondes à 2 minutes ;
(7) lorsque le travail est terminé, l'alarme émet un signal sonore.

5. Dispositif de cuisson (200) selon la revendication 4,
le dispositif de détermination (204) étant également utilisé pour : lors de l'analyse des informations d'attribut afin de déterminer qu'une catégorie de la matière à cuire est une matière fruit et légume, déterminer une dureté correspondante en fonction des informations de catégorie de la matière fruit et légume ;
le dispositif de détermination (204) étant également utilisé pour : déterminer la plage de tailles de particules de la matière cuite en fonction d'une dureté de la matière fruit et légume, une relation correspondante prédéfinie entre dureté et taille de particule ; et
le dispositif de détermination (204) étant également utilisé pour : déterminer un procédé de cuisson correspondant en fonction de la plage de tailles de particules, une relation correspondante prédéfinie entre une plage de tailles de particules et un procédé de cuisson.

6. Dispositif de cuisson (200) selon la revendication 4,
le dispositif de détermination (204) étant également utilisé pour : lors de l'analyse des informations d'attribut afin de déterminer qu'une catégorie de la matière à cuire est une matière légumineuse, une détermination d'une composition de composant nutritif pré-stocké correspondant à la matière légumineuse ; et
le dispositif de détermination (204) étant également utilisé pour : une détermination d'un procédé de cuisson correspondant en fonction d'une composition de composant nutritif de la matière légumineuse, d'une relation correspondante prédéfinie entre une composition de composant nutritif et un procédé de cuisson.

7. Appareil de cuisson, comprenant : le dispositif de cuisson (200) selon l'une quelconque des revendications 4 à 6.

8. Support de stockage lisible par ordinateur ayant un programme informatique stocké dessus,
lorsque le programme informatique est exécuté par un dispositif de cuisson selon la revendication 4, amener le dispositif de cuisson à exécuter le procédé de cuisson selon l'une quelconque des revendications 1 à 3.
